Europäisches Patentamt

European Patent Office

Office européen des brevets

(11) Veröffentlichungsnummer: **0 199 081**
**A2**

(12) **EUROPÄISCHE PATENTANMELDUNG**

(21) Anmeldenummer: **86103648.1**

(22) Anmeldetag: **18.03.86**

(51) Int. Cl.⁴: **G 06 K 7/10**

(30) Priorität: **15.04.85 DE 3513475**

(43) Veröffentlichungstag der Anmeldung:
**29.10.86 Patentblatt 86/44**

(84) Benannte Vertragsstaaten:
**BE DE FR GB IT NL**

(71) Anmelder: **Erwin Sick GmbH Optik-Elektronik**
**Sebastian-Kneipp-Strasse 1**
**D-7808 Waldkirch(DE)**

(72) Erfinder: **Anselment, Christoph**
**Konviktstrasse 11**
**D-7800 Freiburg(DE)**

(72) Erfinder: **Krank, Jürgen**
**Unterfelderweg 9**
**D-7808 Waldkirch(DE)**

(74) Vertreter: **Dipl.-Phys.Dr. Manitz Dipl.-Ing. Finsterwald**
**Dipl.-Ing. Grämkow Dipl.-Chem.Dr. Heyn**
**Dipl.-Phys.Rotermund,**
**B.Sc. Morgan Robert-Koch-Strasse 1**
**D-8000 München 22(DE)**

(54) **Lumineszenztaster.**

(57) Der Lumineszenztaster hat einen als Strangpreßprofil ausgebildeten Gehäuseeinsatz (30), der in vorjustierter Anordnung Teile der Optik und Opto-Elektronik trägt. Der Gehäuseeinsatz läßt sich justiert in einem Gehäuse (10) einbauen, an dem ein peripherer Teil der Optik gehaltert ist. Eine Leuchtstoffröhre (34) mit Präzisionsfassung befindet sich in einer Aufnahme des Gehäuseeinsatzes (30), wobei sie für einen Wechsel durch eine Gehäuseöffnung (56) zugänglich ist.

FIG. 1

0199081

Die Erfindung betrifft einen Lumineszenztaster mit einem
Gehäuse, das eine Öffnung für den Ein- und Austritt von Licht
aufweist und einen Lichtsender, eine Lichtführungsoptik,
einen Lichtempfänger und eine dem Lichtempfänger nachgeordnete Nachweiselektronik enthält, wobei ein peripherer
Teil der Optik an dem Gehäuse in vorbestimmter Position
selbst angebracht ist und die übrigen Elemente in wenigstens
teilweise justierbarer Anordnung zu Baugruppen zusammengefaßt sind.

Derartige Lumineszenztaster werden beispielsweise zur Erkennung von Etiketten bei schwierigen Kontrastverhältnissen eingesetzt. Sie senden einen ultravioletten Lichtstrahl
aus, der außerhalb des Gehäuses von einer fluoreszierenden
Markierung auf dem Etikett in sichtbares Licht umgewandelt
wird. Dieses sichtbare Licht wird vom Lichtempfänger detektiert und in einer elektronischen Schaltung weiterverarbeitet, die dann ein entsprechendes Steuersignal liefert.

Bei bekannten Lumineszenztastern muß im Endstadium der
Montage die Optik justiert werden, indem man die in das
Gehäuse eingebrachten optischen Bauteile relativ zueinander
verstellt. Da im Interesse eines kompakten Aufbaus die
Bauteile auf engstem Raum untergebracht sind, ist ihre
Zugänglichkeit erschwert, und das Justieren entsprechend
mühsam. Die Justierarbeiten müssen von geschultem Fachpersonal vorgenommen werden, und sie sind entsprechend
lohnkostenintensiv. Es ist nicht auszuschließen, daß die
einmal gefundene, optimale Einstellung über die Dauer
des Betriebs verlorengeht. Diese Gefahr besteht besonders
beim Auswechseln des Lichtsenders, der eine kürzere Lebensdauer hat als die übrigen Teile des optischen Systems.
Bei bekannten Lumineszenztastern geht bei einem Austausch des Lichtsenders regelmäßig die Justierung verloren,
und sie müssen neu justiert werden, was aufwendig ist
und wiederum den Einsatz von geschultem Fachpersonal erforderlich macht.

Weiter ist bereits ein Fluoreszenztaster bekannt (GB-PS
422 190), der zum Auslesen von Trockenobst dient und ein Gehäuse besitzt, das eine Öffnung für den Ein- und Austritt von
Licht aufweist sowie einen Lichtsender, eine Lichtführungsoptik und einen Lichtempfänger enthält. Die optischen Komponenten sind dabei in drei Baugruppen gegliedert. Unmittelbar mit dem Gehäuse verbunden sind eine Frontlinse, ein Reflexionsspiegel und eine Plankonvexlinse, die das reflektierte
Licht auf den Lichtempfänger fokussiert. Eine zweite, davon
unabhängige Baugruppe enthält in justierbarer Anordnung den
Lichtsender in Form einer Quecksilberdampflampe und einen die
Quecksilberdampflampe umgebenden, ebenfalls justierbaren Parabolspiegel. Eine dritte Baugruppe wird von dem Lichtempfänger mit zugehöriger Blende gebildet. Außerdem enthält das Gehäuse des bekannten Fluoreszenztasters an nicht näher definierter Stelle eine dem Lichtempfänger nachgeordnete Nachweiselektronik sowie ein elektrisches Versorgungsteil für den Lichtsender.

Die Aufgabe der Erfindung besteht darin, einen Lumineszenztaster von wenig aufwendigem, herstellungs- und montagetechnisch einfachem Aufbau zu schaffen, dessen Justierung erheblich vereinfacht wird und insbesondere beim Einwechseln eines Ersatzlichtsenders auf Dauer einwandfrei erhalten bleibt.

Zur Lösung dieser Aufgabe sieht die Erfindung vor, daß durch einen einzigen Gehäuseeinsatz, der als Träger des Lichtsenders des Lichtempfängers und eines dazu benachbart liegenden Teils der Optik in relativ zueinander justierter Form ausgebildet und mit dem Gehäuse relativ zum peripheren Teil der Optik justiert starr verbindbar in diesem aufgenommen ist.

Erfindungsgemäß ist also nur ein einziger Gehäuseeinsatz vorgesehen, der als kombinierter Träger des Lichtsenders, des Lichtempfängers und eines dazu benachbart liegenden Teils der Optik dient. Diese optischen Komponenten werden in zueinander justierter Form gehaltert, so daß der Einsatz eine in sich optisch komplett vorjustierte Einheit darstellt. Der periphere Teil der Optik liegt seinerseits in fester Position an dem Gehäuse fest, so daß auch insofern durch Vormontage eine fixe Justierung vorgegeben ist. Der Zusammenbau der so vorgefertigten Einheiten, d.h. des Gehäuses mit der peripheren Optik einerseits und des Einsatzes mit Lichtsender, Lichempfänger und zugehöriger Optik andererseits gestaltet sich nun besonders einfach und insbesondere ohne größere Justierarbeiten. Etwa noch verbleibende Positionierarbeiten können von ungeschultem Personal durchgeführt werden. Nachdem der Einsatz in dem Gehäuse exakt positioniert ist, sind alle optischen Komponenten einwandfrei zueinander ausgerichtet.

Nach einer bevorzugten Ausführungsform ist der Gehäuseeinsatz als Strangpreßprofil ausgebildet und bevorzugt mit zur Positionierung dienenden Nuten oder Kerben versehen. Die Strangpreßtechnik ermöglicht es, in kostengünstiger Weise ohne spanende Nachbearbeitung Flächen von hoher Führungsgenauigkeit für die optischen Komponenten zu erstellen. Auch können Positionierungshilfsmittel leicht angeformt werden.

Weiter ist es zweckmäßig, den Gehäuseeinsatz mit Sollbohrstellen zu versehen und ihn erst in justierter Stellung zu verbohren. Die einmal aufgefundene, optimale Justierstellung kann so mit sehr geringen Toleranzen fixiert werden, und es besteht kaum eine Verstellmöglichkeit über die Dauer des Betriebs.

Der Gehäuseeinsatz kann als kombinierter Optik-Elektronik-Einsatz ausgebildet sein, und insbesondere einen dem Lichtempfänger unmittelbar nachgeordneten Teil der Elektronik tragen. Abgesehen davon, daß so bequeme Bestückungsmöglichkeiten eröffnet werden, besteht auch die Möglichkeit, die Justierung der optischen Bauelemente an dem Einsatz unter Verwendung des Lichtempfängers und der zugehörigen Elektronik selbst zu testen.

In einer zweckmäßigen Weiterbildung ist vorgesehen, den Lichtsender lösbar in einer paßgenauen Aufnahme des Gehäuseeinsatzes zu haltern, in der er bezüglich des von dem Einsatz getragenen Teils der Optik justiert zu liegen kommt. Die paßgenaue Aufnahme ermöglicht es dabei, den Lichtsender zu wechseln, wobei ein Ersatzteil einwandfrei justiert zu liegen kommt. Nach Austausch des Lichtsenders ist so kein Nachjustieren der Optik erforderlich. Zweckmäßigerweise sieht man in dem Gehäuse eine Öffnung vor, durch die der Lichtsender zugänglich ist. Der Lichtsender kann so ausgetauscht werden, ohne den Verbund zwischen Gehäuseeinsatz und Gehäuse zu lösen, so daß die Optik insgesamt justiert bleibt.

Es ist von Vorteil, das Gehäuse zur Atmosphäre hin abzudichten, um Staubfreiheit und stabile optische Betriebsbedingungen in seinem Innern zu gewährleisten. Die zum Wechsel des Lichtsenders vorgesehene Öffnung sollte sich dann abdichtend verschließen lassen, wozu in einer konstruktiv unaufwendigen, robusten Bauform eine Panzergewinde-Blindverschraubung dienen kann.

Als Lichtsender kommt vorzugsweise eine Leuchtstoffröhre zum Einsatz, die den Vorteil niedriger Gestehungskosten, eines geringen Energieverbrauchs und einer langen Betriebslebensdauer hat. Leuchtstoffröhren stehen überdies in verschiedenen Spektralbereichen zur Verfügung. Um die Leuchtstoffröhre mit der gewünschten Genauigkeit einbauen zu können, ist eine Präzisionsfassung vorgesehen, in der die Leuchtstoffröhre mechanisch gehaltert und elektrisch kontaktiert ist. Die Präzisionsfassung paßt in eine Aufnahme des Gehäuseeinsatzes.

Die Erfindung wird im folgenden anhand eines in den Zeichnungen dargestellten Ausführungsbeispiels näher erläutert.
Es zeigen:

Figur 1    in seitlicher Ansicht das aufgebrochene Gehäuse
eines kompletten Lumineszenztasters gemäß der
Erfindung;

Figur 2    eine Draufsicht auf das Gehäuse mit Blick in
Richtung II von Fig. 1;

Figur 3    die Seitenansicht eines Gehäuseeinsatzes des
Lumineszenztasters, teilweise in einer Längsmittelebene des Lichtsenders geschnitten;

Figur 4    die Rückansicht einer rechts unten liegenden
Einzelheit von Fig. 3;

Figur 5    eine Draufsicht auf den Gehäuseeinsatz mit Blick
in Richtung V von Fig. 3, zu einem Teil so weit
aufgeschnitten, daß eine unterhalb des Lichtsenders
liegende Spiegelanordnung sichtbar wird;

Figur 6    einen Lichtsender mit zugehöriger Präzisionsfassung im Längsschnitt;

Figur 7    in vergrößertem Maßstab einen Blick auf die
Stirnseite des Lichtsenders in Richtung VII
von Fig. 6.

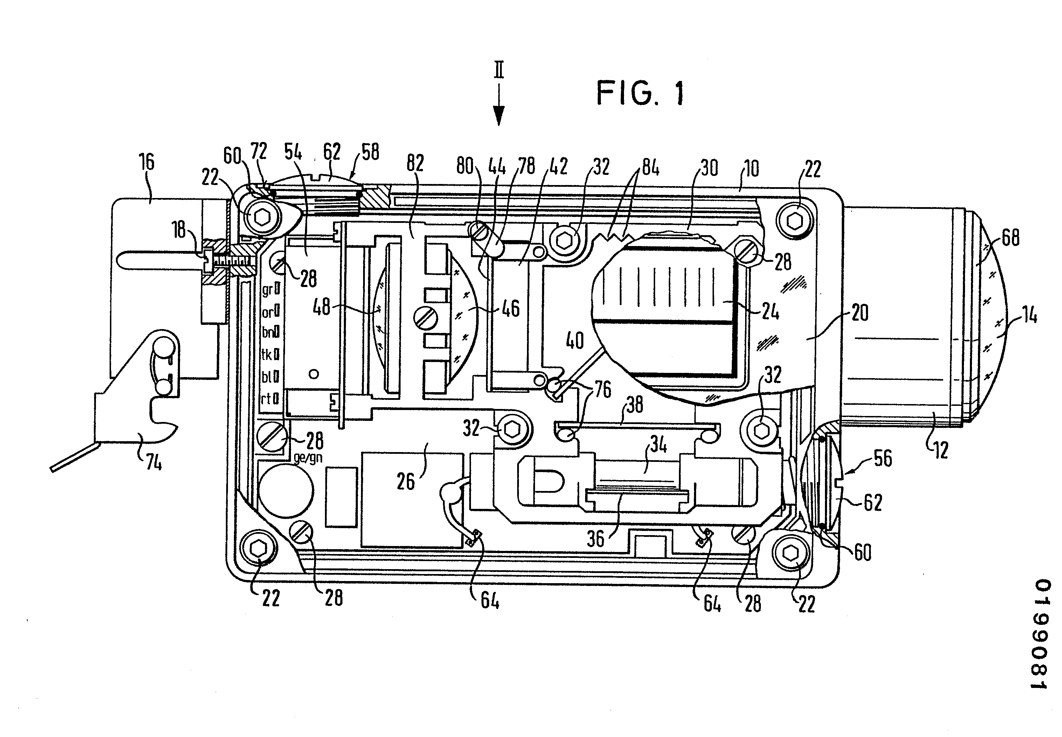

Bezugnehmend auf Fig. 1, hat der Lumineszenztaster ein
zur Atmosphäre hin abgedichtetes Gehäuse 10. Das Gehäuse
10 ist länglich-quaderförmig. An einer vorderen Schmalseite steht aus dem Gehäuse 10 ein Tubus 12 heraus, der
eine zum Lichtein- und -austritt dienende Gehäuseöffnung
umschließt. Der Tubus 12 setzt mittig am oberen Teil des
Gehäuses 10 an. Er trägt an seinem freien, dem Gehäuse
10 abgewandten Ende eine Frontlinse 14. Auf der gegenüberliegenden Schmalseite des Lumineszenztasters befindet
sich im oberen Bereich des Gehäuses 10 ein elektrischer
Anschluß mit Steckkontakten, auf die ein Multipolstecker
16 aufgesetzt wird. Der Stecker 16 wird mit Steckerschrauben
18 an dem Gehäuse 10 festgeschraubt.

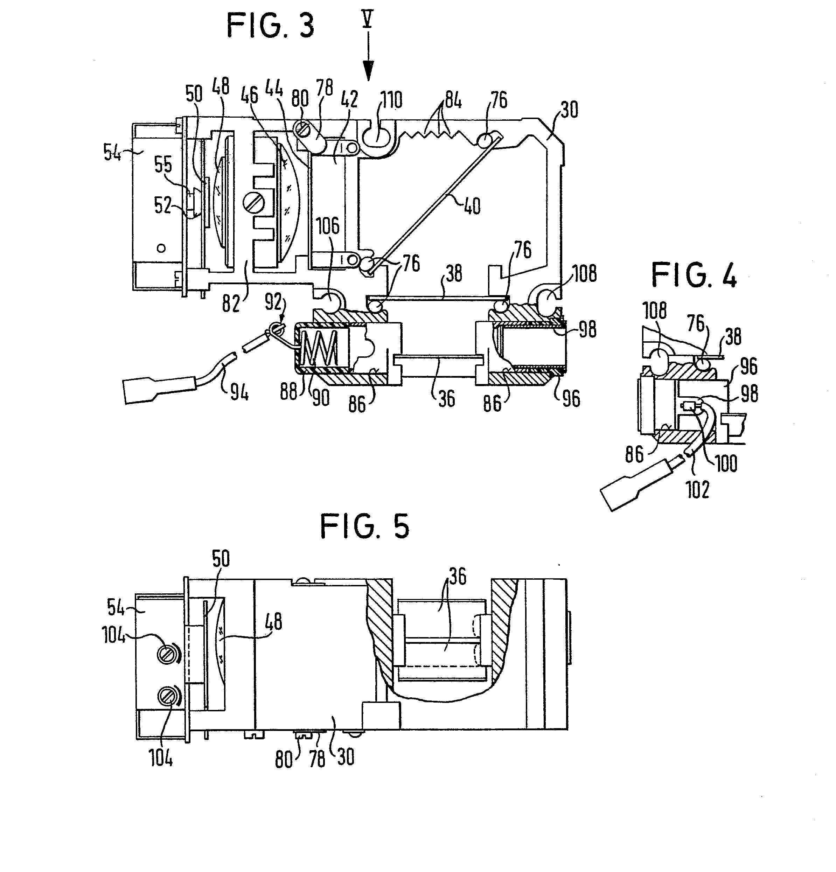

Die in Fig. 1 in Draufsicht gezeigte Gehäuseseite ist
offen und mit einem Gehäusedeckel 20 verschließbar, der
an allen vier Ecken des Gehäuses angeschraubt 22 wird.
Auf dem Deckel 20 befindet sich eine den Hersteller identifizierende Kennung 24. Der Deckel 20 ist in Fig. 1 größtenteils weggebrochen, so daß die Gehäuseeinbauten erkennbar
sind. In einer hinteren, dem Gehäusedeckel 20 abgewandten
Gehäuseebene liegt eine Leiterplatte 26, auf der ein Großteil der elektrischen Versorgungsschaltung und Nachweiselektronik des Lumineszenztasters angebracht ist. Die
Leiterplatte 26 ist mit Schrauben 28 an dem Gehäuse 10
festgeschraubt. Oberhalb der Leiterplatte 26 liegt ein
Gehäuseeinsatz 30, der als kombinierter Optik-Elektronik-
Träger dient und im folgenden anhand von Fig. 3 bis 5
im einzelnen beschrieben wird. Der Einsatz 30 nimmt praktisch den ganzen Innenraum des Gehäuses 10 ein. Er ist
mit Schrauben 32 an dem Gehäuse 10 befestigt, wobei die
Möglichkeit besteht, ihn relativ zu dem Tubus 12 mit der
Frontlinse 14 auszurichten.

Der Gehäuseeinsatz 30 nimmt einen Lichtsender in Gestalt
einer Leuchtstoffröhre 34 auf. Die Leuchtstoffröhre 34
befindet sich im rechten unteren Teil des Gehäuses 10.
Ihre Längsachse 10  ist parallel zu der des Tubus' 12
orientiert. Der Strahlengang des von der Leuchtstoffröhre
34 emittierten Lichts verläuft daher senkrecht zu der
Längsachse des Tubus' 12. Unterhalb der Leuchtstoffröhre 34 befindet sich eine gekrümmte Spiegelanordnung 36, die das nach unten
abgestrahlte Licht zum Tubus 12 hin nach oben umlenkt. Insbesondere
kann an
/dieser Stelle ein Prismenspiegel oder Parabolspiegel Verwendung finden, in dessen Brennpunkt die Leuchtstoffröhre
34 liegt. Der Gehäuseeinsatz 30 trägt ein in dem Strahlengang liegendes optisches Filter 38, das als Farbfilter
ausgebildet sein kann und vorzugsweise zugleich die
Funktion einer Blende erfüllt. Das durch das Filter 38
hindurchtretende Licht fällt auf einen teildurchlässigen
Spiegel 40, der unter einem Winkel von 45° gegen die optische Achse geneigt ist. Der Spiegel 40 ist vorzugsweise
ein dichroitischer Spiegel und wird von dem Gehäuseeinsatz 30
getragen, wobei seine Fassung wiederum die Funktion einer
Blende erfüllen kann. Der Spiegel 40 lenkt das Licht um 90°
um, so daß es durch die Gehäuseöffnung, den Tubus 12 und
die Frontlinse 14 aus dem Gehäuse 10 austritt. Zur Erzeugung
eines gut kollimierten, scharf gebündelten Lichtstrahls kann
der Tubus 12 eine Abbildungsoptik mit diversen Linsen, Blenden
usw. enthalten.

Bei einer Anwendung des Lumineszenztasters als Lichtschranke
fällt der Lichtstrahl auf einen von dem Gehäuse 10 beabstandeten, externen Retroreflektor, der so justiert ist,
daß der Lichtstrahl in sich selbst zurückreflektiert wird.
Das reflektierte Licht tritt durch die Frontlinse 14 wieder
in das Gehäuse 10 ein. Gegebenenfalls nach Passieren der Abbildungsoptik erreicht es den halbdurchlässigen Spiegel 40, wo ein nicht weiter interessierender Teil des Lichts zu der Leuchtstoffröhre 34 hin zurückgeworfen wird. Ein Teil des Lichts passiert aber den halbdurchlässigen Spiegel 40, und es passiert eine Abbildungsoptik, zu der ein als UV-Sperre dienendes Filter 42, eine Blende 44, zwei Plankonvexlinsen 46, 48 und, wie in Fig. 3 gezeigt, ein Filter 50 und eine Lupe 52 gehören. Alle diese optischen Bauelemente werden von dem Gehäuseeinsatz 30 getragen. Die Optik dient dazu, das Licht auf die fotoempindliche Fläche eines Detektors, vorzugsweise eine Fotodiode 54, zu fokussieren. Die Fotodiode 54 und ein dieser unmittelbar zugeordneter elektrischer und/oder elektronischer Schaltungsteil, insbesondere ihr Versorgungsteil und/oder ein in der Nachweisschaltung liegender Vorverstärker, sind gleichfalls an dem Gehäuseeinsatz 30 gehaltert.

Das Gehäuse 10 hat zwei kleinere Öffnungen 56, 58, durch die einzelne Bauteile zugänglich sind, ohne daß der Einsatz 30 insgesamt von dem Gehäuse 10 gelöst werden müßte. Die erste Öffnung 56 dient zum Wechseln der Leuchtstoffröhre 34. Sie befindet sich unterhalb des Tubus' 12 an der Schmalseite des Gehäuses 10 und ist bei montiertem Gehäuseeinsatz 30 der Leuchtstoffröhre 34 stirnseitig vorgeordnet, so daß sich diese in axialer Längsrichtung durch die Öffnung 56 hindurchstecken läßt. Die zweite Öffnung 58 liegt oberhalb der Fotodiode 54 im hinteren oberen Teil des Gehäuses 10. Sie ermöglicht es, eine Einstellung der Fotodiode 54 vorzunehmen bzw. zu ändern. Beide Öffnungen 56, 58 sind unter Zwischenschaltung eines Dichtrings 60 mit einem Schraubdeckel 62 verschlossen, der zur Außenseite hin
als Schraubenkopf gestaltet ist. Insbesondere kann an
dieser Stelle eine Panzergewinde-Blindverschraubung Verwendung finden.

Elektrische Anschlüsse der Leuchtstoffröhre 34 sind bei
64 ausgewiesen. Sie werden mit geeigneten Kontakten an
der Leiterplatte 26 in Verbindung gebracht. Zur Montage
des Lumineszenztasters wird zunächst die Leiterplatte
26 in das Gehäuse 10 eingelegt und lose angeschraubt 28.
Sodann wird der komplett vormontierte Gehäuseeinsatz 30
mit allen daran befindlichen optischen und elektronischen
Bauteilen eingebaut, bezüglich der Tubusoptik ausgerichtet
und angeschraubt 32. Anschließend stellt man die elektrischen Verbindungen her, zieht die Schrauben 28, 32 fest
und schließt den Gehäusedeckel 20.

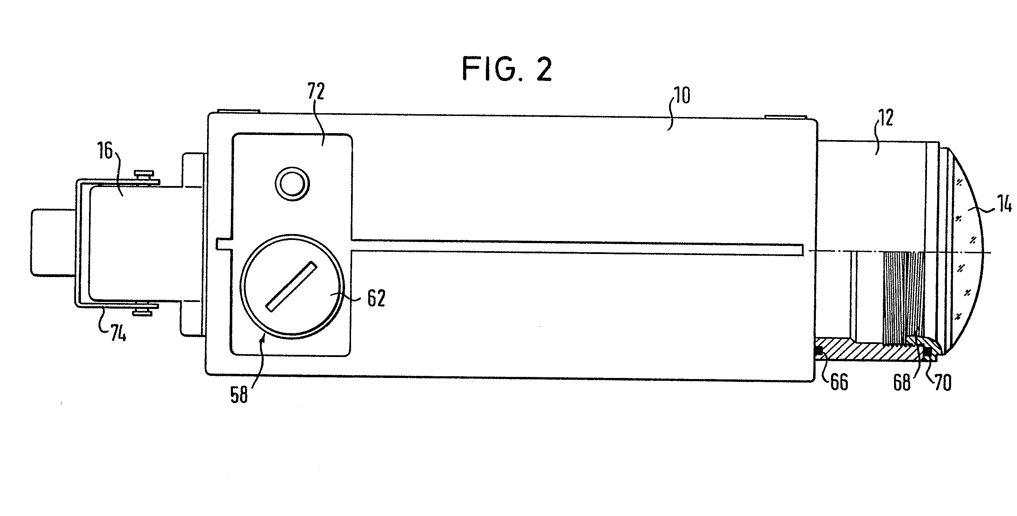

Fig. 2 zeigt die abgedichtete Befestigung des Tubus' 12
an dem Gehäuse 10 unter Zwischenschaltung eines Dichtrings
66. Für die Frontlinse 14 ist eine Schraubhalterung 68
vorgesehen, die sich in ein Innengewinde des Tubus' 12
einschrauben läßt und mit einem zweiten Dichtring 70 gedichtet wird. Man erkennt weiterhin die außermittige Anordnung der Öffnung 58, die sich oberhalb der Fotodiode
55 befindet und mit einer Panzergewinde-Blindverschraubung
verschlossen ist. Die Schraubkappe kommt in einer Einsenkung 72 auf der Oberseite des Gehäuses 10 zu liegen.
Schließlich ist Fig. 2 ein gelenkig an dem Multipolstecker
16 befestigter Bügel 74 zu entnehmen, mit dem die anzusteckende Multipolkupplung gesichert werden kann.

In Fig. 3 bis 5 ist der Gehäuseeinsatz 30 mit daran befestigten, optischen und elektronischen Bauelementen gezeigt,
wobei eine Aufnahme für die Leuchtstoffröhre 34 leer ist.
Der Gehäuseeinsatz 30 ist ein Strangpreßteil insbesondere
aus Leichtmetall, und vorzugsweise aus Aluminium oder
einer Aluminiumlegierung. Der Blick in Fig. 3 ist in Längsrichtung des Strangs gerichtet, von dem einzelne Gehäuseeinsätze 30 abgeschnitten werden. Alle lagebestimmenden
Flächen für die Bauelemente werden in der Strangpreß-Fertigungsstufe erstellt, und es findet insofern regelmäßig
keine spanende Nachbearbeitung statt. An dem Rohling müssen
in zerspanender Technik im wesentlichen nur die von dem
Tubus 12 umgebene Gehäuseöffnung für den Ein- und Austritt
von Licht und die Aufnahme für die Leuchtstoffröhre 34
gebohrt sowie verschiedene kleine Montagebohrungen angebracht werden. Der Fertigungsaufwand ist entsprechend
gering, und die optischen Elemente lassen sich leicht
in einwandfreier Ausrichtung relativ zueinander positionieren, ohne daß besondere Justierarbeiten erforderlich sind.

Das Strangpreßprofil des Gehäuseeinsatzes 30 hat in seitlicher Ansicht (Fig. 3) eine L-Grundform. An einem der
zueinander orthogonalen L-Schenkel befindet sich die Leuchtstoffröhre 34 oder ein anderer Lichtsender wie z. B. eine
Soffitte, ein Laser usw., und in dem anderen L-Schenkel
liegt der Fotodetektor 54. Das Strangpreßprofil hat für
wenigstens einen Teil der optischen Bauelemente Aussparungen, die den Rand der Bauelemente aufnehmen und ebene
Anlageflächen bieten, an denen sich die Bauelemente positionieren lassen. Insbesondere sind so die Spiegel 36
unterhalb des Lichtsenders in den Gehäuseeinsatz 30 eingebaut. Die Spiegel 36 sind mit den zugehörigen Führungsflächen des Gehäuseeinsatzes 30 verklebt. Das Filter 38
und der teildurchlässige Spiegel 40 sind klemmend an dem
Gehäuseeinsatz 30 festgelegt. Halteelement sind je zwei
Stränge elastischer Rundschnur, die sich entlang einander
gegenüberliegender Seitenränder der optischen Komponenten
erstrecken und mit diesen zusammen in Aussparungen des
Gehäuseeinsatzes 30 einsitzen. Die Aussparungen haben
an die Rundschnur angepaßte Ausarbeitungen. Bei der Montage
wird die Rundschnur 76 in die Ausarbeitung eingezogen,
das optische Bauteil eingesetzt und die Schnur entlastet, worauf ihre überstehenden Enden abgeschnitten werden können.

Für die Blende 44 ist an dem Gehäuseeinsatz 30 eine Aufnahme ausgeformt, in die sich die Blende 44 formschlüssig einsetzen läßt. Sie wird in montierter Stellung von einem Riegel 78 gehalten, der um den Schaft einer Schraube 80 drehbar an dem Gehäuseeinsatz 30 gelagert ist und sich durch Anziehen der Schraube 80 feststellen läßt. Weiterhin ist einstückig an den Gehäuseeinsatz 30 ein Linsenhalter 82 angeformt.

Die dem Lichtsender gegenüberliegende Innenseite des Gehäuseeinsatzes 30 jenseits des halbdurchlässigen Spiegels 40 hat einen rauhe Oberflächenstruktur. Fig. 3 zeigt insofern eine Verzahnung mit rechtwinklig zueinander verlaufenden Zahnflanken. Die Verzahnung dient als Diffusor und Absorber für den Lichtanteil, der nach Austritt aus dem Lichtsender von dem halbdurchlässigen Spiegel 40 nicht reflektiert wird, sondern ihn passiert und damit für die Messung verloren ist. Die Verzahnung 84 ist in Strangpreßtechnik mit dem Gehäuseeinsatz 30 ausgeformt, der in dem verzahnten oder sonstwie aufgerauhten Bereich zusätzlich geschwärzt sein kann.

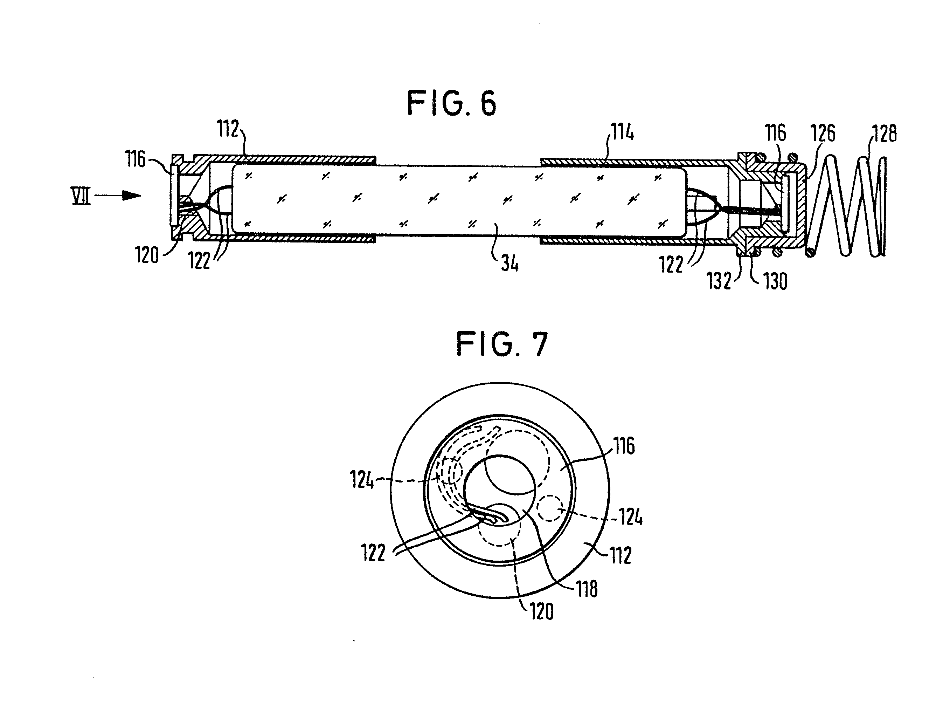

Die Aufnahme für die Leuchtstoffröhre 34 ist eine das Strangpreßteil des Gehäuseeinsatzes 30 durchziehende Querbohrung 86. Wie noch anhand von Fig. 6 und 7 näher erläutert, ist die Leuchtstoffröhre 34 stabförmig. Sie emittiert Licht in ihrem axialen Mittelbereich und ist an den beiden Enden elektrisch kontaktiert. In den gehäuse-innenseitigen Abschnitt der Querbohrung 86 ist eine Isolierbuchse 88 eingesteckt, die eine als Schraubendruckfeder ausgebildete Kontaktfeder 90 umschließt. Ein Ende der Feder ist mittig durch den Boden der Isolierbuchse 88 hindurchgeführt und mit einer Litze 92 verlötet. Die Lötstelle kann mit einem zuvor auf die Litze 92 aufgezogenen und über der Lötstelle aufgeschrumpften Schrumpfschlauch isoliert werden. Das gehäuse-außenseitige Ende der Querbohrung 86 nimmt formschlüssig eine Isolierhülse 96 auf, in die ihrerseits
eine Kontaktbuchse 98 eingesetzt ist. Auf der in Fig.
4 gezeigten Rückseite der Kontaktbuchse befindet sich
ein elektrischer Anschluß 100, in dessen Umgebung die
Isolierhülse 96 aufgebrochen ist. Mit dem elektrischen
Anschluß 100 ist eine Litze 102 punktverschweißt, die
durch die Wandöffnung der Isolierbuchse hindurchgeführt
ist und den zweiten elektrischen Kontakt der Leuchtstoffröhre 34 herstellt.

Fig. 5 läßt erkennen, daß die Spiegelanordnung 36 unterhalb
der Leuchtstoffröhre 34 aus zwei nebeneinander angeordneten
Spiegeln besteht. Weiterhin sind Steuerknöpfe 104 an dem
Elektronikteil 54 zu erkennen, das an dem Gehäuseeinsatz
30 gehaltert und der Fotodiode 55 unmittelbar zugeordnet
ist. Wie schon erwähnt, ist der Gehäuseeinsatz 30 ein
kombinierter Optik-Elektronik-Träger.

Die Genauigkeit der im Strangpreßverfahren erhaltenen
Anlage- und Führungsflächen garantiert, daß die an dem
Einsatz 30 montierten optischen und opto-elektronischen
Bauelemente in justierter Stellung zueinander liegen.
Dies gilt insbesondere auch für die Leuchtstoffröhre 34,
die dazu in einer nachstehend beschriebenen Präzisionsfassung aufgenommen ist. Beim Zusammenbau des Lumineszenztasters muß nur noch der komplett vormontierte Gehäuseeinsatz 30 relativ zu dem Optikteil in dem Tubus 12 ausgerichtet werden. Bezugnehmend auf Fig. 1 und 3, ist dazu
eine Dreipunktverschraubung mit Paßstiften 32 vorgesehen.
Drei sich in Längrichtung des Strangpreßteils erstreckende
Durchstecköffnungen 106, 108, 110 sind als Sackschlitze
ausgebildet, wobei die Schlitzöffnung gegenüber dem inneren
Teil der Durchstecköffnung 106, 108, 110 halsartig verengt
ist. Zwei Durchstecköffnungen 106, 108 befinden sich an
dem L-Schenkel des Gehäuseeinsatzes, der den Lichtsender trägt, und zwar beidseits oberhalb der zugehörigen Aufnahme. Der erweiterte Innenbereich der gehäuse-innenseitig liegenden Durchsteköffnung 106 ist im Querschnitt kreisrund und der der gehäuse-außenseitig liegenden Durchsteköffnung oval. Eine dritte Durchsteköffnung 110 von gleichfalls ovalem Innenquerschnitt ist etwa mittig an der Oberseite des Gehäuseeinsatzes 30 angeordnet. Die Durchsteköffnung 106 mit Rundquerschnitt bildet eine Achse, um die sich der ganze Einsatz 30 schwenken läßt, wofür die Durchstecköffnungen 108, 110 mit ovalem Querschnitt das nötige Spiel bieten. Man kann so den Gehäuseeinsatz 30 bei zunächst lose eingeschraubten Paßstiften 32 justieren und dann die Paßstifte 32 festziehen.

Fig. 6 und 7 zeigen die als Lichtsender dienende Leuchtstoffröhre 34 in einer Präzisionsfassung. Die Fassung besteht aus zwei auf die beiden Enden der Leuchtstoffröhre 34 aufgesteckten Hülsen 112, 114, die präzise in die Aufnahme des Gehäuseeinsatzes 30 passen. Die Hülsen 112, 114 bestehen aus Metall. Sie sind an ihren freien axialen Enden mit je einem ebenfalls metallischen Deckel 116 verschlossen. Der Deckel weist eine Mittelbohrung 118 von relativ großem Durchmesser auf. Elektrische Anschlußdrähte 122 der Leuchtstoffröhre 34 werden durch die Durchsteköffnung 120 der Hülsen 112, 114 hindurchgeführt und an den Deckel 116 punktgeschweißt 124.

Beim Anbringen der Präzisionshalterung verschiebt man die Leuchtstoffröhre 34 axial in den Hülsen 112, 114, bis eine optimale Ausleuchtung erzielt wird. Die Hülsen 112, 114 werden dabei in einem wohldefinierten Abstand festgehalten. Nach Erreichen der optimalen Einstellung werden die Hülsen 112, 114 durch die Mittelbohrung 118 der Deckel 116 hindurch mit Klebstoff ausgegossen, wobei man einen zerstörungsfrei nicht mehr lösbaren Verbund erhält. Sodann werden die Anschlußdrähte 122 angepunktet.

Auf die in Fig. 6 rechts liegende Hülse 114 ist eine Kappe
126 aufgeklebt, um die eine Druckfeder 128 herumliegt.
Kappe 126 und Druckfeder 128 sind ebenfalls miteinander
verklebt. Die Kappe 126 hat einen radial abstehenden Flansch
130, an dem sich das Ende der Schraubendruckfeder 128 abstützt. Der Flansch 130 kommt bei montierter Kappe 126 an
einem radial abstehenden Bund 132 der Hülse 114 zu liegen.
Wie Fig. 1 und 3 zu entnehmen, ist die montierte Leuchtstoffröhre 34 zwischen zwei Druckfedern 90, 128 an ihren
beiden axialen Enden eingespannt.


In dem dargestellten Ausführungsbeispiel sind die Befestigungsbohrungen 108, 110, 112 für den Gehäuseeinsatz 30
an diesem komplett vorgeformt. Es ist aber auch eine Anordnung möglich, bei der der Einsatz 30 erst in justierter
Position verbohrt wird, wobei an dem Strangpreßprofil
vorgesehene Vertiefungen oder Nuten als Basis für die
Anordnung der Bohrungen dienen können.

- 1 -

Patentansprüche :

1. Lumineszenztaster mit einem Gehäuse, das eine Öffnung
für den Ein- und Austritt von Licht aufweist  und einen
Lichtsender, eine Lichtführungsoptik, einen Lichtempfänger
und eine dem Lichtempfänger nachgeordnete Nachweiselek-·
tronik enthält, wobei ein peripherer Teil der Optik an
dem Gehäuse in vorbestimmter Position selbst angebracht
ist und die übrigen Elemente in wenigstens teilweise justierbarer Anordnung zu Baugruppen zusammengefaßt sind,
g e k e n n z e i c h n e t durch einen einzigen Gehäuseeinsatz (30), der als Träger des Lichtsenders, des
Lichtempfängers und eines dazu benachbart liegenden Teils
der Optik in relativ zueinander justierter Form ausgebildet und mit dem Gehäuse relativ zum peripheren Teil der
Optik justiert starr verbindbar in diesem aufgenommen
ist.

2. Lumineszenztaster nach Anspruch 1, dadurch g e k e n n - z e i c h n e t , daß der Gehäuseeinsatz (30) als Strangpreßprofil ausgebildet ist.

3. Lumineszenztaster nach Anspruch 1 oder 2, dadurch g e k e n n z e i c h n e t , daß das Gehäuse (10) und/oder der Einsatz (30) mit Referenzaufnahmepunkten versehen sind, mittels derer sich der Einsatz (30) im Innern des Gehäuses (10) positionieren läßt.

4. Lumineszenztaster nach einem der Ansprüche 1 bis 3, dadurch g e k e n n z e i c h n e t , daß der Einsatz (30) mit zur Positionierung dienenden Nuten, Kerben oder Montagebohrungen (106, 108, 110) versehen ist.

5. Lumineszenztaster nach einem der Ansprüche 1 bis 4, dadurch g e k e n n z e i c h n e t , daß der Einsatz (30) mit Sollbohrstellen versehen ist, an denen er sich in justierter Position zur Herstellung einer Schraubverbindung verbohren läßt.

6. Lumineszenztaster nach einem der Ansprüche 1 bis 5, dadruch g e k e n n z e i c h n e t , daß der Einsatz (30) als kombinierter Optik-Elektronik-Einsatz ausgebildet ist, und insbesondere einen dem Lichtempfänger unmittelbar nachgeordneten Teil der Elektronik trägt.

7. Lumineszenztaster nach einem der Ansprüche 1 bis 6, dadurch g e k e n n z e i c h n e t , daß der Lichtsender lösbar in einer paßgenauen Aufnahme des Einsatzes (30) gehaltert ist, in der er bezüglich des von dem Einsatz (30) getragenen Teils der Optik justiert zu liegen kommt.

8. Lumineszenztaster nach einem der Ansprüche 1 bis 7, dadurch g e k e n n z e i c h n e t, daß das Gehäuse (10) eine Öffnung (56) aufweist, durch die der Lichtsender für einen Wechsel zugänglich ist.

9. Lumineszenztaster nach einem der Ansprüche 1 bis 8, dadurch g e k e n n z e i c h n e t, daß die Öffnung (56) mit einer Panzergewinde-Blindverschraubung verschließbar ist.

10. Lumineszenztaster nach einem der Ansprüche 1 bis 9, dadurch g e k e n n z e i c h n e t, daß der Lichtsender eine vorzugsweise in einer Präzisionsfassung (112, 114) aufgenommene Leuchtstoffröhre (34) ist.

0199081

FIG. 1

0199081

FIG. 2

## FIG. 3

## FIG. 4

## FIG. 5

# FIG. 6

# FIG. 7